# EUROPÄISCHE PATENTANMELDUNG

(11) **EP 1 310 849 A1**
(43) Veröffentlichungstag der Anmeldung: **14.05.2003**
(21) Anmeldenummer: 02024731.8
(22) Anmeldetag: 06.11.2002
(51) Int. Cl.: G05D 1/03, B65G 1/04

(54) **Optoelektronische Positionierungsvorrichtung**

(30) Priorität: 08.11.2001 DE 20118210 U
(71) Anmelder: Leuze electronic GmbH + Co., 73277 Owen/Teck (DE)
(72) Erfinder: Göhner, Matthias, 72581 Dettingen/Erms (DE); Langner, Stefan, 72770 Reutlingen (DE); Wörner, Jörg, 73235 Weilheim (DE); Kälberer, Roland, 73230 Kirchheim/Teck (DE)
(74) Vertreter: Ruckh, Rainer Gerhard, Dr.

(57) **Zusammenfassung**

Die Erfindung betrifft eine optoelektronische Vorrichtung (1) zur Erfassung von Marken. Die erfindungsgemäße Vorrichtung (1) weist einen Sendelichtstrahlen (8) empfangenden Sender (6), einen Empfangslichtstrahlen (12) empfangenden Empfänger (13) und eine Ablenkeinheit (10) auf, mittels derer die Sendelichtstrahlen (8) innerhalb eines Abtastbereichs (A) geführt sind. Weiterhin weist die erfindungsgemäße Vorrichtung eine Auswerteeinheit (5) zur Auswertung der am Ausgang des Empfängers (13) anstehenden Empfangssignale auf. Die zu erfassenden Marken bilden ein Positionsmaßsystem (16), wobei in jeder Marke deren Position innerhalb des Positionsmaßsystems (16) kodiert ist. Durch Erfassung wenigstens einer Marke des Positionsmaßsystems (16) ist die Position der optoelektronischen Vorrichtung relativ zum Positionsmaßsystem (16) bestimmbar und als Ausgangssignal ausgebbar.

## Beschreibung

Die Erfindung betrifft eine optoelektronische Vorrichtung gemäß dem Oberbegriff des Anspruchs 1.

Derartige optoelektronische Vorrichtungen werden üblicherweise zur Identifikation von Gegenständen eingesetzt. Die Gegenstände sind jeweils mit einem Barcode gekennzeichnet und werden beispielsweise auf einem Förderband transportiert. Die optoelektronische Vorrichtung ist stationär am Förderband so installiert, dass die einzelnen Barcodes nacheinander abgetastet und dabei dekodiert werden, wodurch die einzelnen Gegenstände erfasst werden.

Aus der DE 199 10 933 A1 ist eine Einrichtung bekannt, bei der derartige Vorrichtungen zur Positionierzwecken eingesetzt werden.

Diese Einrichtung dient zur Positionierung eines Fahrzeugs an einem stationären Gegenstand, wobei des Fahrzeug entlang einer vorgegebenen Bahn entlang des Gegenstands verfahrbar ist. An den Gegenständen sind in vorgegebenen Abständen Kodierungen aufweisende Marken angebracht, welche mittels der optoelektronischen Vorrichtung am Fahrzeug erfassbar sind. Zur Absolutortsbestimmung des Fahrzeuges werden während einer Referenzart die Kodierungen der Marken nacheinander erfasst und die dabei registrierten Messwerte als Referenzwerte abgespeichert. Während auf die Referenzfahrt folgender Fahrten des Fahrzeugs werden die Kodierungen der Marken zur Grobpositionierung des Fahrzeugs erfasst und mit den Referenzwerten verglichen. Zur Feinpositionierung des Fahrzeugs wird mittels der optoelektronischen Vorrichtung deren Lage relativ zu einer der Marken oder einer weiteren Zielmarke bestimmt.

Mit dieser Einrichtung kann das Fahrzeug sehr genau an einer Sollposition am jeweiligen Fahrzeug positioniert werden. Nachteilig hierbei ist jedoch, dass vor der jeweiligen Positionierfahrt des Fahrzeuges zunächst eine Referenzfahrt mit dem Fahrzeug durchgeführt werden muss, um die jeweiligen Marken nacheinander zu erfassen und einzulesen.

Der Erfindung liegt die Aufgabe zugrunde eine Vorrichtung der eingangs genannten Art so auszubilden, dass mit dieser auf einfache und kostengünstige Weise eine Positionierbestimmung durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von Marken und weist einen Sendelichtstrahlen empfangenden Sender, einen Empfangslichtstrahlen empfangenden Empfänger, eine Ablenkeinheit, mittels derer die Sendelichtstrahlen innerhalb eines Abtastbereichs geführt sind, und eine Auswerteeinheit zur Auswertung der am Ausgang des Empfängers anstehenden Empfangssignale auf. Die zu erfassenden Marken bilden ein Positionsmaßsystem, wobei in jeder Marke deren Position innerhalb des Positionsmaßsystems kodiert ist. Durch Erfassung wenigstens einer Marke des Positionsmaßsystems ist die Position der optoelektronischen Vorrichtung relativ zum Positionsmaßsystems bestimmbar und als Ausgangssignal ausgebbar.

Das Positionsmaßsystem besteht aus einer Anordnung von Marken, insbesondere Barcodes, in welchen deren Absolutpositionen innerhalb des Positionsmaßsystems kodiert sind. Durch die fortlaufende Abtastung der einzelnen Marken mittels der optoelektronischen Vorrichtung kann deren aktuelle Position relativ zum Positionsmaßsystem schnell und sicher erfasst werden.

Das Positionsmaßsystem ist vorzugsweise als Maßband ausgebildet, welches vorzugsweise aus einer Folge von hintereinander angeordneten Segmenten gleicher Breite besteht, wobei auf jeweils ein Segment ein Barcode aufgebracht ist. Dieses Maßband kann beispielsweise auf eine Fahrbahnbegrenzung aufgebracht werden. Vorzugsweise ist das Maßband als Klebeband ausgebildet, welches auf die Fahrbahnbegrenzung aufgeklebt wird. Die Installation des Maßbandes ist dadurch schnell und einfach durchführbar. Weiterhin ist vorteilhaft, dass das Maßband auch auf gekrümmten Flächen und damit an Kurvenstücken der Fahrbahnbegrenzung angebracht werden kann.

Die optoelektronische Vorrichtung ist dann auf einem Fahrzeug installiert, welches längs der Fahrbahnbegrenzung entlang geführt ist. Die Abtastebene, an welcher die Sendelichtstrahlen geführt sind, verläuft dabei zumindest näherungsweise in Längsrichtung des Maßbandes. Durch die Detektion der Barcodes auf dem Maßband kann dann insbesondere auch in Kurvenfahrten und bei veränderlichen Distanzen des Fahrzeugs zum Maßband die aktuelle Position bestimmt werden.

Zur Positionsbestimmung können prinzipiell mehrere oder sämtliche innerhalb des Abtastbereichs erfassten Marken ausgewertet werden. Dabei werden zur Positionsbestimmung nicht nur die einzelnen Marken dekodiert sondern auch deren Lagen innerhalb des Abtastbereichs erfasst.

Besonders vorteilhaft erfolgt die Lageerfassung einer Marke durch Bestimmung deren Position innerhalb des Abtastbereichs relativ zu einem Referenzpunkt, der vorzugsweise von der Mitte des Abtastbereichs gebildet ist. Bei bekanntem Leseabstand der optoelektronischen Vorrichtung zum Positionsmaßsystem kann der Abstand der jeweiligen Marke zum Referenzpunkt in einen Distanzwert umgerechnet werden, um welchen die Marke versetzt zum Referenzpunkt liegt. Da durch die Dekodierung dieser Marke deren Position bekannt ist, wird somit die Absolutposition der Marke relativ zum Referenzpunkt erhalten. Damit ist die Position der Vorrichtung relativ zum Positionsmaßsystem exakt bestimmbar.

Der Leseabstand der optoelektronischen Vorrichtung zum Positionsmaßsystem ist im einfachsten Fall konstant und als Parameterwert in der optoelektronischen Vorrichtung hinterlegt. Besonders vorteilhaft wird der Leseabstand in der optoelektronischen Vorrichtung fortlaufend berechnet. Hierzu sind die Muster und die Geometrien der Marken des Positionsmaßsystem in der optoelektronischen Vorrichtung als Parameterwerte hinterlegt. Dann kann aus der Anzahl der innerhalb des Abtastbereichs liegenden Marken sowie anhand der Auswertung der Größen der Ausschnitte des Abtastbereichs innerhalb derer die Marken erfasst werden, über trigonometrische Beziehungen der aktuelle Leseabstand ermittelt werden.

In einer besonders vorteilhaften Ausführungsform der Erfindung wird jeweils nur die Marke zur Positionsbestimmung herangezogen, welche innerhalb des Abtastbereichs am nächsten zum Referenzpunkt liegt. Die Positionsbestimmung erfordert dann nur einen geringeren Rechenaufwand.

Die in der optoelektronischen Vorrichtung generierten Positionswerte werden vorteilhaft mit einer vorgegebenen Taktrate an eine Steuereinheit ausgegeben. Anhand der Positionswerte erfolgt mittels der Steuerung insbesondere eine Positionierung des Fahrzeugs, auf welchen die optoelektronische Vorrichtung montiert ist.

Die erfindungsgemäße Vorrichtung ist insbesondere als Positionsmaßsystem an Regalbediengeräten, Krananlagen, Verschiebewagen oder Hängebahnen einsetzbar.

Die Erfindung wird im nachstehenden anhand der Zeichnungen erläutert. Es zeigen:
- Fig. 1:: Schematische Darstellung des Aufbaus einer optoelektronischen Vorrichtung zur Erfassung von Marken.
- Fig. 2:: Anordnung einer Vorrichtung gemäß Figur 1 auf einem Fahrzeug, welches entlang einer Fahrbahnbegrenzung mit einem Positionssystem verfahrbar ist.
- Fig. 3:: Detaildarstellung des Positionsmaßsystems gemäß Figur 2.

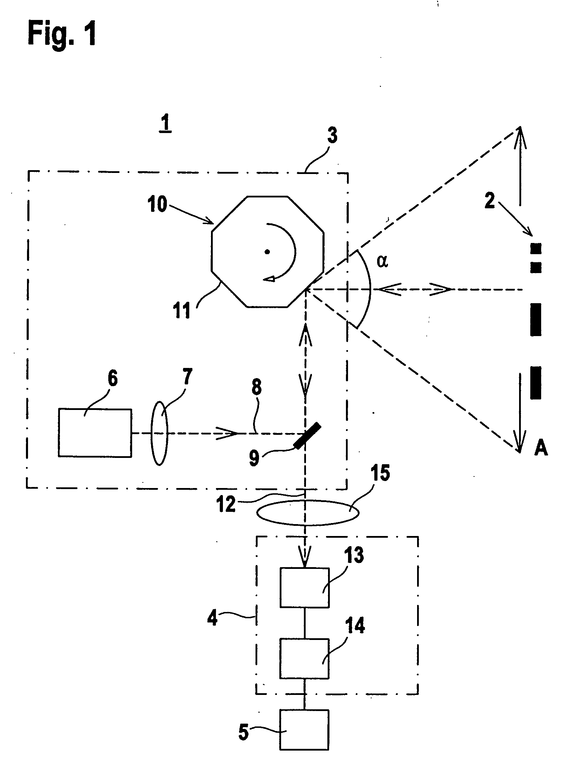

In Figur 1 ist der prinzipielle Aufbau einer optoelektronischen Vorrichtung 1 zur Erfassung von Marken dargestellt. Die optoelektronische Vorrichtung 1 ist im vorliegenden Beispiel als Barcodelesegerät ausgebildet. Entsprechend sind die Marken, die allgemein definierte Kontrastmuster aufweisen, im vorliegenden Fall als Barcodes 2 ausgebildet, welche aus einer Folge von dunklen und hellen Strichelementen definierter Länge und Breite bestehen.

Die optoelektronische Vorrichtung 1 besteht im wesentlichen aus einer Sendeeinheit 3, einer Empfangseinheit 4 sowie einer Auswerteeinheit 5.

Die Sendeeinheit 3 besteht aus einem Sender 6, vorzugsweise einer Laserdiode, sowie aus einer dem Sender 6 vorgeordneten Sendeoptik 7. Die Sendeoptik 7 dient zur Fokussierung der vom Sender 6 emittierten Sendelichtstrahlen 8. Die fokussierten Sendelichtstrahlen 8 werden über einen Umlenkspiegel 9 auf eine Ablenkeinheit 10, die im vorliegenden Ausführungsbeispiel von einem rotierenden Polygonspiegelrad gebildet ist, geführt. Das Polygonspiegelrad weist eine vorgegebene Anzahl von identisch ausgebildeten Spiegelflächen 11 auf. Die Sendelichtstrahlen 8 werden an den Spiegelflächen 11 abgelenkt und von dort auf den zu detektierenden Barcode 2 geführt. Die Drehachse des Polygonspiegelrads ist senkrecht zur in Figur 1 dargestellten Äquatorialebene des Polygonspiegelrads angeordnet.

Die Sendelichtstrahlen 8 werden am Barcode 2 reflektiert und als Empfangslichtstrahlen 12 über das Polygonspiegelrad 11 zur Empfangseinheit 4 geführt. Die Empfangseinheit 4 besteht aus einem Empfänger 13 , in der die Empfangslichtstrahlen 12 in ein elektrisches Empfangssignal gewandelt werden. Der Empfänger 13 ist vorzugsweise von einer Photodiode gebildet. Zur Verstärkung der Empfangssignale am Ausgang des Empfängers 13 ist ein Verstärker 14 vorgesehen. Zur Fokussierung der Empfangslichtstrahlen 12 ist dem Empfänger 13 eine Empfangsoptik 15 vorgeschaltet.

Die am Ausgang des Empfängers 13 anstehende Empfangssignale werden der Auswerteeinheit 5 zugeführt. Die Auswerteeinheit 5 weist eine Schwellwerteinheit auf, mittels derer die Empfangssignale in binäre Signalfolgen gewandelt und anschließend zur Erfassung des Barcodes 2 dekodiert werden.

Im vorliegenden Ausrührungsbeispiel weist das Polygonspiegelrad 11 acht Spiegelflächen 11 auf. Dementsprechend wird ein Öffnungswinkel des Barcodelesegeräts von 90° erhalten. Während einer Abtastperiode werden die Sendelichtstrahlen 8 innerhalb des Öffnungswinkels entlang einer Abtastebene geführt, welche senkrecht zur Drehachse des Polygonspiegelrades 11 orientiert ist. Der Öffnungswinkel ist in Figur 1 mit α bezeichnet. Der Öffnungswinkel α definiert den Abtastbereich A, der mit den Sendelichtstrahlen 8 periodisch überstrichen wird.

Mit der optoelektronischen Vorrichtung 1 wird erfindungsgemäß ein Positionsmaßsystem 16 abgetastet, womit diese ein Positionsmesssystem bildet.

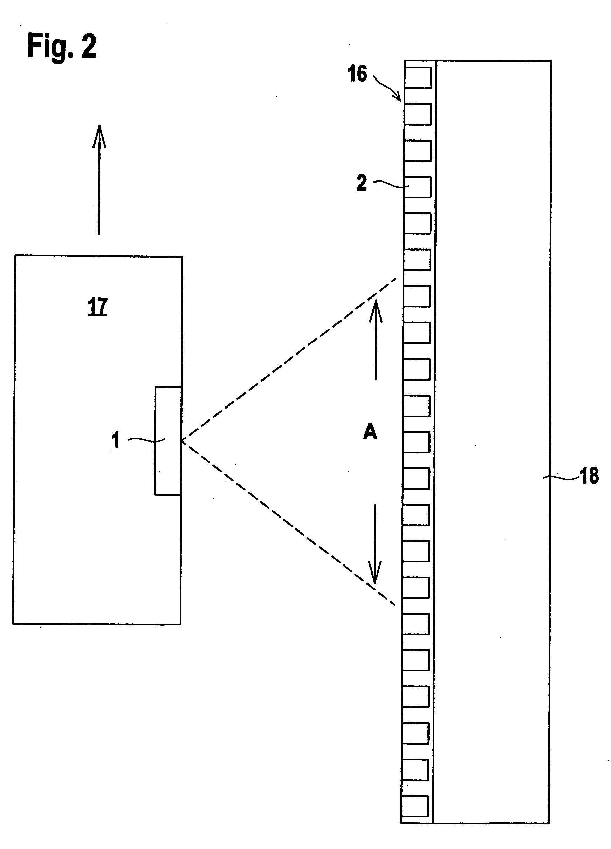

Ein typisches Anwendungsbeispiel eines derartigen Positionsmaßsystems 16 ist in Figur 2 dargestellt. Die optoelektronische Vorrichtung 1 ist auf einem Fahrzeug 17 montiert, welches im vorliegenden Ausführungsbeispiel von einem spurgeführten Verschiebewagen gebildet ist. Alternativ kann das Fahrzeug 17 von einer Hängebahn, einem Regalbediengerät, einem Kran oder dergleichen gebildet sein.

Die Fahrbahn ist seitlich von einer Fahrbahnbegrenzung 18 wie zum Beispiel einer Leitplanke begrenzt. Das Positionsmaßsystem 16 ist auf der der optoelektronischen Vorrichtung 1 zugewandten Frontseite der Fahrbahnbegrenzung 18 aufgebracht.

Im vorliegenden Ausführungsbeispiel ist das Positionsmaßsystem 16 als Maßband ausgebildet, welches auf eine Unterlage aufgeklebt werden kann. Damit kann bei dem Ausführungsbeispiel gemäß Figur 2 das Positionsmaßsystem 16 auch dann auf die Leitplanke aufgebracht werden, wenn diese in einer Kurve längs einer gekrümmten Bahn verläuft.

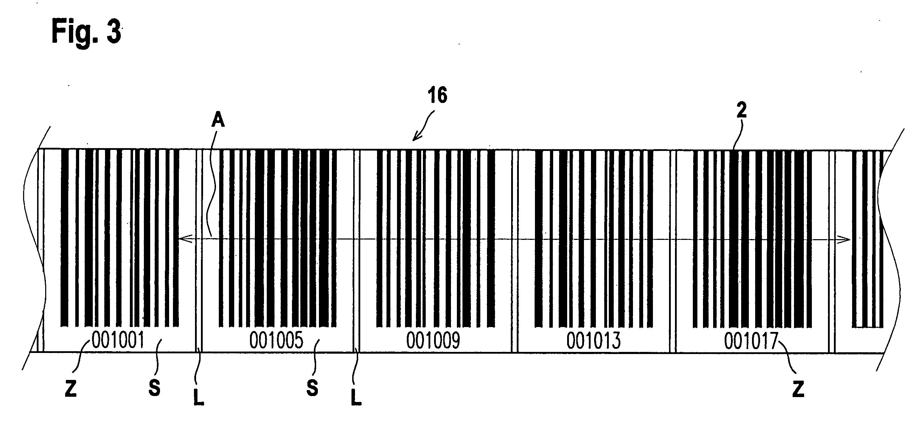

Wie insbesondere aus Figur 3 ersichtlich, besteht das Maßband aus einer Folge von in Längsrichtung des Positionsmaßstabs 16 hintereinander angeordneten Barcodes 2. Jeder Barcode 2 ist auf ein separates Segment S des Maßbandes aufgebracht, wobei benachbarte Segmente S jeweils durch eine Schneidelücke L getrennt sind. Die Segmente S weisen jeweils eine identische Breite auf. Die Breiten der Schneidelücken L zwischen den einzelnen Segmenten S sind ebenfalls konstant.

Die einzelnen Segmente S bilden somit identische Maßstabsmodule, so dass eine vorgegebene Länge des Maßbandes durch die Anzahl der Segmente S multipliziert mit der Breite der Segmente S und der Breite der jeweils anschlieβenden Schneidelücke L vorgegeben ist. Die Segmente S innerhalb des Maßbandes sind fortlaufend nummeriert, so dass jede Nummer eines Segmentes S die Position innerhalb des Maßbandes kodiert. Die Nummer eines Segments S ist in dem jeweiligen Barcode 2 kodiert und zudem unterhalb des Barcodes 2 als Ziffernfolge Z unterhalb des Barcodes 2 auf das Segment S aufgedruckt. Anhand der Ziffernfolge Z kann die jeweilige Nummer eines Segments S von dem Bedienpersonal abgelesen werden. Je nach Länge der Leitplanke wird das Maßband in der entsprechenden Länge zugeschnitten und auf die Leitplanke aufgeklebt.

Wie aus Figur 2 ersichtlich, verläuft die Längsachse des Maßbandes auf der Leitplanke in horizontaler Richtung und damit in Fahrtrichtung des Fahrzeuges 17. Die optoelektronische Vorrichtung 1 ist auf dem Fahrzeug 17 in der Höhe des Fahrzeugs 17 so montiert, so dass die Abtastebene auf der Höhe des Maßbandes liegt, wobei die optoelektronische Vorrichtung 1 so ausgerichtet wird, dass die Abtastebene im wesentlichen in horizontaler Richtung verläuft.

Wie aus Figur 3 ersichtlich, verläuft damit die Abtastebene der Sendelichtstrahlen 8 senkrecht zu den Längsachsen der Strichelemente der Barcodes 2 auf deren Maßstab. Abhängig von der Größe des Abtastbereichs A und des Leseabstandes liegt eine bestimmte Anzahl von Barcodes 2 innerhalb des Abtastbereichs A der optoelektronischen Vorrichtung 1.

Zur aktuellen Positionsbestimmung der optoelektronischen Vorrichtung 1 wird wenigstens einer der im Abtastbereich A liegenden Barcodes 2 ausgewertet. Dabei wird einerseits die Kodierung des Barcodes 2 erfasst, in welcher die Position des dem Barcode 2 zugeordneten Segments S innerhalb des Maßbandes enthalten ist. Zudem wird die Lage des Barcodes 2 innerhalb des Abtastbereichs A erfasst.

Hierzu ist in der optoelektronischen Vorrichtung ein Referenzpunkt definiert, der im vorliegenden Fall von der Mitte des Abtastbereiches A gebildet ist.

Zur Positionsbestimmung wird der dem Referenzpunkt am nächsten liegende Barcode 2 herangezogen. Dabei erfolgt zum einem die Dekodierung dieses Barcodes 2 und zum anderen die Bestimmung des Abstands des Barcodes 2 zum Referenzpunkt. Bei bekanntem Leseabstand der optoelektronischen Vorrichtung zum Maßband kann dieser Abstand in einen Distanzwert umgerechnet werden, um welchen der Barcode 2 versetzt zur Mittelachse des Abtastbereichs A liegt. Damit ist die Position der optoelektronischen Vorrichtung 1 relativ zum Maßband exakt bestimmt.

Der Leseabstand selbst wird vorzugsweise ebenfalls während der Abtastung des Maßbandes bestimmt. Bei bekannten und als Parameterwerten in der optoelektronischen Vorrichtung 1 abgespeicherten Geometriedaten des Maßbands, insbesondere der Muster und Abmessungen der Barcodes 2 sowie der Breiten der Segmente S, kann aus der Anzahl und den Lagen der Barcodes 2 innerhalb des Abtastbereichs A über trigonometrische Beziehungen der Leseabstand berechnet werden.

Insbesondere kann bei der Abtastung der Barcodes 2 auch erfasst werden, ob die Abtastebene gegenüber der Längsachse des Maßbandes geneigt verläuft. Durch Bestimmung des Neigungswinkels kann die Verkippung der Abtastebene bezüglich der Längsachse des Maßbandes bei der Bestimmung des Leseabstandes kompensiert werden.

Besonders vorteilhaft ist die optoelektronische Vorrichtung 1 so justiert, dass die Abtastebene exakt in Längsrichtung des Maßbandes verläuft. Hierzu emittiert der Sender 6 zweckmäßigerweise Sendelichtstrahlen 8 im sichtbaren Bereich, wodurch die Ausrichtung der optoelektronischen Vorrichtung 1 erheblich vereinfacht wird.

Die Positionsbestimmung in der optoelektronischen Vorrichtung 1 erfolgt kontinuierlich. Die so generierten Positionswerte werden über eine nicht dargestellte Schnittstelle der optoelektronischen Vorrichtung 1 als Ausgangssignale ausgegeben.

Diese Ausgangssignale werden vorzugsweise in eine externe Steuereinheit eingelesen, in welcher die Positionswerte zu Positionierzwecken verwendet werden.

Im vorliegenden Ausführungsbeispiel dient die Steuereinheit zur Steuerung des Verschiebewagens. In der Steuereinheit sind typischerweise mehrere Sollpositionen abgespeichert, an welchen der Verschiebewagen beispielsweise zur Durchführung von Be- und Entladevorgängen angehalten werden muss. Die Positionierung des Verschiebewagens erfolgt dann durch einen Vergleich dieser Sollwerte mit den von der optoelektronischen Vorrichtung eingelesenen Positionswerten.

### Bezugszeichenliste

- (1): Optoelektronische Vorrichtung
- (2): Barcode
- (3): Sendeeinheit
- (4): Empfangseinheit
- (5): Auswerteeinheit
- (6): Sender
- (7): Sendeoptik
- (8): Sendelichtstrahlen
- (9): Umlenkspiegel
- (10): Ablenkeinheit
- (11): Spiegelflächen
- (12): Empfangslichtstrahlen
- (13): Empfänger
- (14): Verstärker
- (15): Empfangsoptik
- (16): Positionsmaßsystem
- (17): Fahrzeug
- (18): Fahrbahnbegrenzung

- A: Abtastbereich
- S: Segment
- L: Schneidelücke
- Z: Ziffernfolge

## Patentansprüche

1. Optoelektronische Vorrichtung zur Erfassung von Marken mit einem Sendelichtstrahlen (8) empfangenden Sender (6), einem Empfangslichtstrahlen (12) empfangenden Empfänger (13), einer Ablenkeinheit (10), mittels derer die Sendelichtstrahlen (8) innerhalb eines Abtastbereichs (A) geführt sind, und einer Auswerteeinheit (5) zur Auswertung der am Ausgang des Empfängers (13) anstehenden Empfangssignale, **dadurch gekennzeichnet, dass** die zu erfassenden Marken ein Positionsmaßsystem (16) bilden, wobei in jeder Marke deren Position innerhalb des Positionsmaßsystems (16) kodiert ist, und dass durch Erfassung wenigstens einer Marke des Positionsmaßsystems (16) die Position der optoelektronischen Vorrichtung relativ zum Positionsmaßsystem (16) bestimmbar und als Ausgangssignal ausgebbar ist.

2. Optoelektronische Vorrichtung nach Anspruch 1, **dadurch gekennzeichnet, dass** die Marken von Barcodes (2) gebildet sind.

3. Optoelektronische Vorrichtung nach Anspruch 2, **dadurch gekennzeichnet, dass** das Positionsmaßsystem (16) als Maßband von hintereinander angeordneten Barcodes (2) gebildet ist.

4. Optoelektronische Vorrichtung nach Anspruch 3, **dadurch gekennzeichnet, dass** das Maßband auf eine Unterlage aufklebbar ist.

5. Optoelektronische Vorrichtung nach einem der Ansprüche 3 oder 4, **dadurch gekennzeichnet, dass** das Maßband in Segmente (S) gleicher Breite unterteilt ist, wobei auf jedem Segment (S) ein Barcode (2) aufgebracht ist.

6. Optoelektronische Vorrichtung nach Anspruch 5, **dadurch gekennzeichnet, dass** auf jedem Segment (S) zusätzlich zu dem Barcode (2) die in diesem kodierte Position als Ziffernfolge (Z) aufgebracht ist.

7. Optoelektronische Vorrichtung nach Anspruch 5 oder 6, **dadurch gekennzeichnet, dass** zwischen zwei benachbarten Segmenten (S) des Maßbandes eine Schneidelücke (L) vorgegebener Breite vorgesehen ist.

8. Optoelektronische Vorrichtung nach einem der Ansprüche 3 - 7, **dadurch gekennzeichnet, dass** diese auf einem Fahrzeug (17) angeordnet ist, welches an einer Fahrbahnbegrenzung (18) vorbeibewegt wird, an welcher das Maßband angeordnet ist.

9. Optoelektronische Vorrichtung nach Anspruch 8, **dadurch gekennzeichnet, dass** die Längsachse des Maßbandes in horizontaler Richtung verläuft.

10. Optoelektronische Vorrichtung nach Anspruch 8 oder 9, **dadurch gekennzeichnet, dass** das Fahrzeug (17) von einem Regalbediengerät, einer Krananlage, einem Verschiebewagen oder einer Hängebahn gebildet ist.

11. Optoelektronische Vorrichtung nach einem der Ansprüche 1 - 10, **dadurch gekennzeichnet, dass** zur Positionsbestimmung das Muster einer Marke und deren Lage bezüglich eines vorgegebenen Referenzpunkts innerhalb des erfassten Abtastbereichs (A) ausgewertet wird.

12. Optoelektronische Vorrichtung nach Anspruch 11, **dadurch gekennzeichnet, dass** der Referenzpunkt von der Mitte des Abtastbereichs (A) gebildet ist.

13. Optoelektronische Vorrichtung nach Anspruch 11 oder 12, **dadurch gekennzeichnet, dass** bei der Erfassung mehrer Marken innerhalb des Abtastbereichs (A) die dem Referenzpunkt am nächsten liegende Marke zur Positionsbestimmung herangezogen wird.

14. Optoelektronische Vorrichtung nach einem der Ansprüche 11 - 13, **dadurch gekennzeichnet, dass** durch Bestimmung deren Leseabstands zum Maßband der Abstand der zur Positionsbestimmung herangezogenen Marke zum Referenzpunkt in einen Distanzwert umgerechnet wird.

15. Optoelektronische Vorrichtung nach Anspruch 14, **dadurch gekennzeichnet, dass** bei vorgegebenen Breiten der Marken aus der Anzahl der im Abtastbereich (A) liegenden Marken und/oder der Breite des Segments (S) des Abtastbereichs (A), innerhalb dessen eine Marke erfasst wird, der Leseabstand ermittelt wird.

16. Optoelektronische Vorrichtung nach einem der Ansprüche 1 - 15, **dadurch gekennzeichnet, dass** die Abtastebene parallel zur Längsrichtung des Maßstabs verläuft.

17. Optoelektronische Vorrichtung nach einem der Ansprüche 14 - 16, **dadurch gekennzeichnet, dass** bei einer Neigung der Abtastebene zur Längsrichtung des Maßstabs der Neigungswinkel zur Berechnung des Distanzwertes zwischen dem zur Positionsbestimmung herangezogenen Barcodes (2) und dem Referenzpunkt herangezogen wird.

18. Optoelektronische Vorrichtung nach einem der Ansprüche 1 - 17, **dadurch gekennzeichnet, dass** der Sender (6) Sendelichtstrahlen (8) im sichtbaren Bereich emittiert.

19. Optoelektronische Vorrichtung nach einem der Ansprüche 1 - 18, **dadurch gekennzeichnet, dass** die ermittelten Positionswerte mit einer vorgegebenen Taktrate über eine Schnittstelle ausgebbar sind.

20. Optoelektronische Vorrichtung nach Anspruch 19, **dadurch gekennzeichnet, dass** die Positionswerte an eine Steuereinheit ausgebbar sind, wobei mittels der Steuereinheit unter Verwendung der Positionswerte eine Positionierung eines Fahrzeugs (17) an vorgegebenen Sollpositionen erfolgt.
